# EUROPÄISCHE PATENTANMELDUNG

(11) **EP 1 744 107 A1**
(43) Veröffentlichungstag der Anmeldung: **17.01.2007**
(21) Anmeldenummer: 06115914.1
(22) Anmeldetag: 22.06.2006
(51) Int. Cl.: F24H 9/12

(54) **Sicherheitsarmatur**

(30) Priorität: 11.07.2005 DE 202005010998 U
(71) Anmelder: HANS SASSERATH & CO KG, 41352 Korschenbroich (DE)
(72) Erfinder: Hecking, Willi, 41372 Niederkrüchten-Elmpt (DE)
(74) Vertreter: Weisse, Renate

(57) **Zusammenfassung**

In einer Sicherheitsarmatur sind gleichachsig hintereinander ein Trinkwasseranschluß (22), ein Kugelventil (26), ein Rückflußverhinderer (48) und ein Sicherheitsventil (64) mit einem Ablauf (66) angeordnet. Stromab von dem Ventilsitz (46) des Rückflußverhinderers (48) ist seitlich ein Anschlußstutzen (40) zur Verbindung mit einem Warmwasserbereiter vorgesehen. Im Bereich des Kugelventils (26) ist ein verschließbarer Ablauf (36) vorgesehen In einer ersten Schaltstellung des Kugelventils (26) ist durch den Durchgangskanal (44) ein Durchgang von dem Einlaß (22) zu dem Rückflußverhinderer (48) freigegeben. In einer zweiten Schaltstellung des Kugelventils (26) ist der Durchgang abgesperrt aber ein gedrosselter Durchgang (68) stellt eine Verbindung zwischen der stromaufwärtigen Seite (70) des Rückflußverhinderers (48) und dem Durchgangskanal (44) des Kugelventils (26) her. In dem Durchgangskanal (44) ist ein sich über den Querschnitt des Durchgangskanals (44) erstreckender, fingerhutförmiger Schmutzfänger (72) angeordnet. Der Schmutzfänger ist nach Öffnen des verschließbaren Ablaufs (36) durch diesen Ablauf (36) hindurch zu Wartungszwecken aus dem Durchgangskanal (44) des Kugelventils (24) herausziehbar.

## Beschreibung

Die Erfindungen betrifft eine Sicherheitsarmatur, in welcher gleichachsig hintereinander ein Trinkwasseranschluß, ein Kugelventil, ein Rückflußverhinderer und ein Sicherheitsventil mit einem Ablauf angeordnet sind und stromab von dem Ventilsitz des Rückflußverhinderers seitlich ein Anschlußstutzen zur Verbindung mit einem Warmwasserbereiter vorgesehen ist, wobei im Bereich des Kugelventils ein verschließbarer Ablauf vorgesehen ist, in einer ersten Schaltstellung des Kugelventils ein Durchgangskanal einen Durchgang von dem Einlaß zu dem Rückflußverhinderers freigegeben ist und in einer zweiten Schaltstellung des Kugelventils der Durchgang abgesperrt ist aber ein gedrosselter Durchgang eine Verbindung zwischen der stromaufwärtigen Seite des Rückflußverhinderers und dem Durchgangskanal des Kugelventils hergestellt ist.

Eine solche Sicherheitsarmatur ist bekannt durch die EP 1 460 354 A1.

Die EP 1 460 354 A1 betrifft eine Sicherheitsgruppe zum Absichern von Trinkwassererwärmern. Die Sicherheitsgruppe enthält ein Gehäuse, das einen Einlaß und einen Auslaß, einen Ablauf sowie einen Aufnahmestutzen aufweist. Eine patronenartige Sicherheitsventil-Baugruppe ist in den Aufnahmestutzen herausnehmbar eingesetzt und wirkt mit einem gehäuseseitigen Ventilsitz zusammen. Die Sicherheitsventil-Baugruppe mit dem Ventilsitz bilden ein Sicherheitsventil, das eine Verbindung zwischen Durchflußkanal und Ablauf beherrscht. Ein Rückflußverhinderer in dem Durchlaufkanal verhindert einen Rückfluß von Wasser von dem Auslaß zu dem Einlaß. Der Einlaß und der Aufnahmestutzen sind gleichachsig auf gegenüberliegenden Seiten des Gehäuses angeordnet und über eine Durchgangsbohrung verbunden. In der Durchgangsbohrung sitzt ein hülsenförmiger Einsatz mit einer Längsbohrung. Der Einsatz bildet an seinem dem Aufnahmestutzen zugewandten Ende den mit der Sicherheitsventil-Baugruppe zusammenwirkenden Ventilsitz. Der Einsatz enthält den Rückflußverhinderer in Form einer in die Längsbohrung eingesetzten Patrone und bildet auf seiner Innenseite an seinem einlaßseitigen Ende einen Ventilsitz für den Rückflußverhinderer. stromab von dem Ventilsitz des Rückflußverhinderers geht seitlich ein den Auslaß bildender Anschlussstutzen ab. Zwischen Einlaß und Rückflußverhinderer sitzt ein Kugelventil mit einem Durchgangskanal, der im Normalbetrieb in einer ersten Schaltstellung den Durchgang vom Einlaß über den Rückflußverhinderer zum Auslaß freigibt. Zum Prüfen des Rückflußverhinderers kann das Kugelventil in eine zweite Schaltstellung gedreht werden. In dieser Schaltstellung ist der Raum stromauf von dem Rückflußverhinderer über eine enge Bohrung mit dem quer zur Durchgangsbohrung des Gehäuses stehenden Durchgangskanal des Kugelventils verbunden. Der Einlaß ist dann abgesperrt. Der Durchgangskanal steht dann wiederum mit einem durch einen Stopfen verschließbaren Ablaß in Verbindung. Nach Entfernen des Stopfens kann dann die Dichtigkeit des Rückflußverhinderers geprüft werden.

Es kann erforderlich sein, dem Einlaß einen Schmutzfänger nachzuschalten. Das ist insbesondere der Fall, wenn von dem durch die Sicherheitsarmatur geführten Kaltwasser ein Teil unmittelbar einem thermostatischen Mischventil zugeführt wird. Dieses Mischventil mischt Wasser von dem Warmwasserbereiter und das kalte Wasser derart, daß zum Verbraucher wohltemperiertes Wasser abfließen kann. Dieser Schmutzfänger muß bequem zu reinigen sein. Weiterhin sollten die Abmessungen und der Aufbau der Sicherheitsarmatur nicht wesentlich geändert werden.

Der Erfindungen liegt daher die Aufgabe zugrunde, bei einer Sicherheitsarmatur der eingangs genannten Art in raumsparender Weise und leicht zu warten einen Schmutzfänger vorzusehen.

Erfindungensgemäß wird diese Aufgabe dadurch gelöst, daß in dem Durchgangskanal ein sich über den Querschnitt des Durchgangskanals erstreckender Schmutzfänger angeordnet ist, welcher nach Öffnen des verschließbaren Ablaufs durch diesen Ablauf zu Wartungszwecken aus dem Durchgangskanal des Kugelventils herausziehbar ist.

Der Schmutzfänger sitzt also in dem Durchgangskanal des Kugelventils und erfordert somit keinen zusätzlichen Raum. Zum Warten des Schmutzfängers dient ein verschließbarer Ablauf, der zur Kontrolle des Rückflußverhinderers sowieso vorhanden ist.

Vorteilhafterweise ist an der Sicherheitsarmatur stromab von dem Ventilsitz des Rückflußverhinderers seitlich und gegen den Warmwasserbereiter-Anschlussstutzen winkelversetzt ein weiterer Anschlußstutzen zur direkten Verbindung mit einem thermostatischen Mischventil vorgesehen.

Als zweckmäßig hat es sich weiterhin erwiesen, wenn der Schmutzfänger fingerhutförmig ist und sich in der ersten Schaltstellung des Kugelventils zu dem Einlaß hin öffnet.

Ein Ausführungsbeispiel der Erfindungen ist nachstehend unter Bezugnahme auf die zugehörigen Zeichnungen näher erläutert.
- Fig.1: zeigt einen Längsschnitt der Sicherheitsarmatur längs der Linie A - A von Fig.1, wobei das Kugelventil in seiner normalen, ersten Schaltstellung ist.
- Fig.2: zeigt einen Schnitt längs der Linie C -C von Fig.1.
- Fig.3: zeigt einen Längsschnitt der Sicherheitsarmatur längs der Linie A - A von Fig.1, wobei das Kugelventil in seiner zweiten Schaltstellung ist, in welcher der Rückflußverhinderer geprüft und/oder der Schmutzfänger gewartet werden kann.

In den Figuren ist mit 10 generell ein Armaturengehäuse einer Sicherheitsarmatur bezeichnet. Das Armaturengehäuse 10 besteht aus einem Einlaßteil 12 und einer Sicherheitsventil-Aufnahme 14, die mit einem Stutzen 16 des Einlaßteils 12 mittels einer Überwurfmutter 18 verbunden ist.

Das Einlaßteil 12 weist einen rohrförmigen Gehäuseteil 20 auf. In den rohrförmigen Gehäuseteil 20 ist ein Eillaßstutzen 22 eingeschraubt. Der Einlaßstutzen 22 ist an ein Trinkwassersystem anschließbar. In dem rohrförmigen Gehäuseteil 20 sitzt eine Ventilkugel 24 eines Kugelventils, das generell mit 26 bezeichnet ist, Die Ventilkugel 24 ist zwischen einer ringförmigen, konkav-sphärischen Lagerfläche 28 mit einem Dichtring 30 des Einlaßteils 12 und einer ringförmigen, konkav-sphärischen Lagerfläche 32 mit einem Dichtring 34 an der inneren Stirnfläche des Einlaßstutzens 22 gehalten. Im Bereich der Ventilkugel 24 ist an dem rohrförmigen Gehäuseteil 20 ein Ablaufstutzen 36 angeformt, der durch einen lösbaren Stopfen 38 verschlossen ist. An dem Einlaßteil 12 ist weiterhin ein seitlicher Anschlußstutzen 40 gebildet. Dieser Anschlußstutzen 40 ist mit einem Warmwasserbereiter verbindbar.

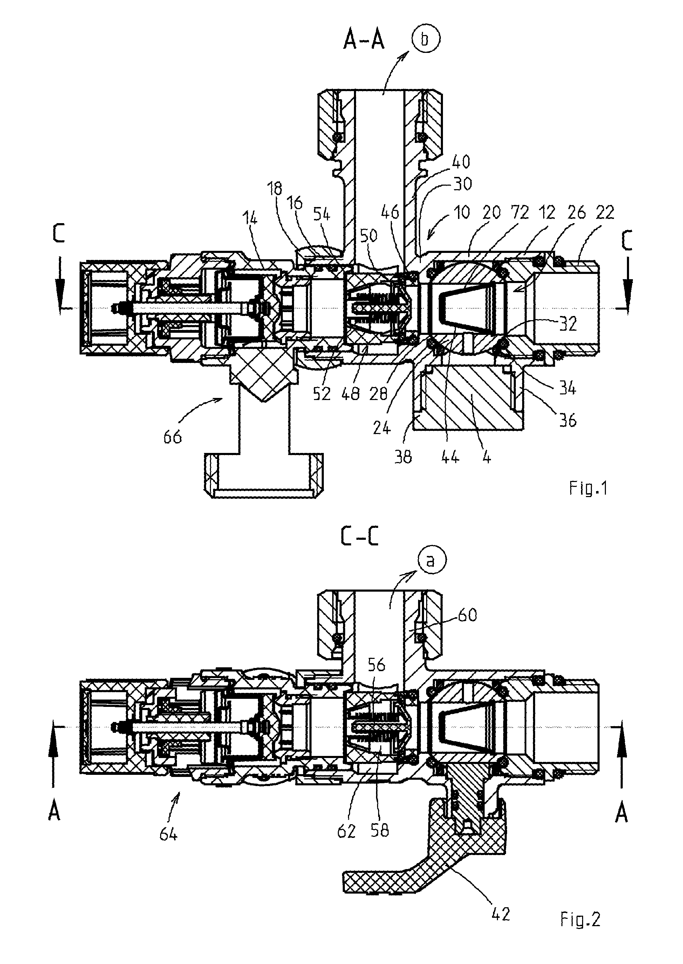

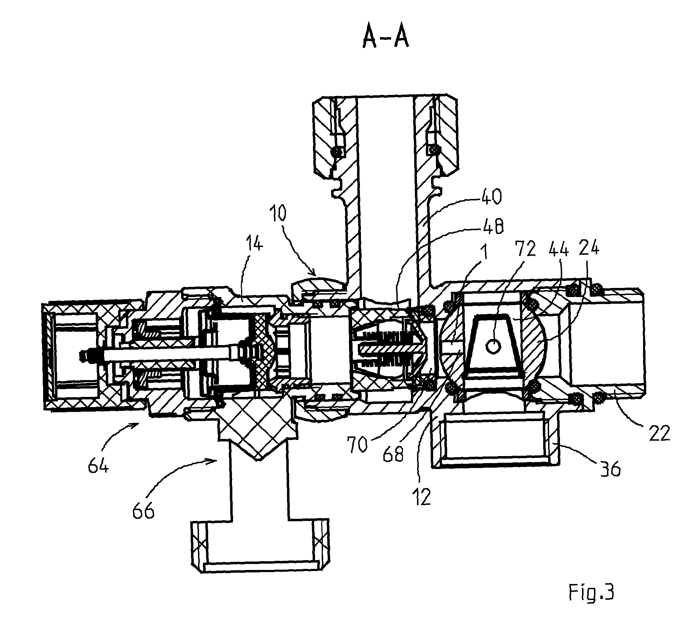

Die Ventilkugel 24 ist durch einen Drehgriff 42 (Fig.2) zwischen einer ersten Schaltstellung (Fig.1), die dem normalen Betrieb entspricht, und einer zweiten Schaltstellung (Fig.3) verdrehbar. In der ersten Schaltstellung gibt ein diametraler Durchgangskanal 44 der Ventilkugel 24 den Wasserdurchfluß von dem Einlaßstutzen 22 zu dem Anschlußstutzen 40 frei. In der zweiten Schaltstellung ist die Verbindung zu dem Kanal des Einlaßstutzens 22 durch die Ventilkugel 24 unterbrochen. Der Durchgangskanal 44 fluchtet mit dem Ablaufstutzen 36.

Stromab von der Ventilkugel 24 und stromauf von dem Anschlußstutzen 40 ist ein Ventilsitz 46 eines Rückflußverhinderers vorgesehen, der generell mit 48 bezeichnet ist. Der Rückflußverhinderer 48 weist einen Ventilschließkörper 50 auf, der von einer Feder 52 belastet ist und mit dem Ventilsitz 46 zusammenwirkt. Die Feder 52 stützt sich an einem Federwiderlager 54 ab. In dem Federwiderlager ist ein Ventilschaft 56 des Ventilschließkörpers 50 geführt. Das Federwiderlager 54 ist durch Stege 58 mit dem Ventilsitz 46 verbunden. Im Normalbetrieb drückt der Wasserdruck den Rückflußverhinderer 48 gegen die Wirkung der Feder 52 auf. Das Trinkwasser aus dem Trinkwassersystem fließt dann über den Einlaßstutzen 22, durch den Durchgangskanal 44 der Ventilkugel, durch den Ventilsitz 46 des Rückflußverhinderers 48 und zwischen den Stegen 58 hindurch zu dem Anschlußstutzen 40.

Wie aus Fig.2 ersichtlich ist, ist an dem Einlaßteil 12 senkrecht zu dem zum Trinkwassererwärmer führenden Anschlußstutzen 40 ein weiterer Anschlußstutzen 60 vorgesehen. Dieser Anschlußstuten 60 ist direkt mit einem (nicht dargestellten) thermostatischen Mischventil verbunden. Auf diese Weise kann das heiße Wasser aus dem Trinkwassererwärmer mit kaltem Wasser so gemischt werden, daß dem Benutzer wohltemperiertes warmes Wasser mit einer geregelten Temperatur zur Verfügung gestellt wird.

Der Einlaßstutzen 22, der Einlaßteil 20 mit dem rohrförmigen Gehäuseteil 20 und einem den Rückflußverhinderer 48 aufnehmenden Abschnitt 62 und die Sicherheitsventil-Aufnahme 14 bilden einen gerade durchgehenden Kanal. In der Sicherheitsventil-Aufnahme 14 ist ein patronenartiges Sicherheitsventil 64 aufgenommen, das generell mit 64 bezeichnet ist. Das Sicherheitsventil 64 ist von bekannter Bauart und z.B. in der vorgenannten EP 1 460 354 A1 näher beschrieben. An der Sicherheitsventil-Aufnahme 14 ist ein Ablauf 66 vorgesehen.

Der Rückflußverhinderer 48 verhindert, daß Wasser aus dem Warmwasserbereiter aus irgendeinem Grunde, z.B. durch einen Druckabfall im Trinkwassersystem in das Trinkwassersystem zurückfließen kann. Es ist vorgeschrieben, daß dieser Rückflußverhinderer auf Dichtigkeit überprüft werden kann. Für diese Überprüfung wird die Ventilkugel 24 mittels des Drehgriffes 42 in die in Fig.3 dargestellte zweite Schaltstellung gedreht. In dieser Schaltstellung ist der Durchgang zum Einlaßstutzen abgedeckt. Über eine kleine Bohrung 68 steht der Raum 70 vor dem Ventil des Rückflußverhinderers 48 mit dem Durchgangskanal der Ventilkugel in Verbindung. Wenn der Stopfen 38, wie in Fig.3 dargestellt, entfernt wird, dürfte bei intaktem Rückflußverhinderer 48 kein Wasser aus dem Ablaufstutzen 36 austreten. Tritt Wasser aus, dann zeigt das eine Undichtigkeit des Rückflußverhinderers 48 an.

Nach der Erfindungen sitzt nun in dem Durchgangskanal 44 der Ventilkugel 24 ein Schmutzfänger 72, also z.B. ein feines Sieb. Der Schmutzfänger 72 überdeckt den Durchgangskanal der Ventilkugel 24. Wenn die Ventilkugel in der ersten Schaltstellung von Fig.1 und 2 ist, also im Normalbetrieb, fließt alles vom Einlaßstutzen 22 zufließende Trinkwasser durch den Schmutzfänger 72. Dadurch werden Feststoffpartikel, die im Trinkwasser auftreten könnten, zurückgehalten. Das ist insbesondere wichtig, wenn ein Strom von Trinkwasser über Anschluß 60 unmittelbar zu einem thermostatischen Mischventil geleitet wird. Dort können solche Feststoffpartikel die Funktion des Mischventils stören. Der Schmutzfänger 72 ist fingerhutförmig und mit seinem offenen Ende dem Einlaßstutzen zugewandt.

Der Schmutzfänger bedarf der Wartung. Er muß von Zeit zu Zeit gereinigt werden. Die beschriebene Anordnung gestattet eine solche Wartung auf sehr einfache Weise dadurch, daß der Schmutzfänger 72 nach Öffnen des verschließbaren Ablaufs 36 durch diesen Ablauf 36 zu Wartungszwecken aus dem Durchgangskanal 44 des Kugelventils 24 herausziehbar ist. Zur Wartung des Schmutzfängers 72 dient somit die Anordnung, die zum Prüfen des Rückflußverhinderers sowieso vorhanden ist. Es braucht somit der Aufbau der Sicherheitsarmatur nicht geändert zu werden. Allenfalls müssen die Abmessungen des Durchgangskanals 44 und des Ablaufs 36 so gewählt werden, daß das Herausziehen des fingerhutförmigen Schmutzfängers 72 in der Schaltstellung von Fig.3 möglich ist.

## Patentansprüche

1. Sicherheitsarmatur, in welcher gleichachsig hintereinander ein Trinkwasseranschluß (22), ein Kugelventil (26), ein Rückflußverhinderer (48) und ein Sicherheitsventil (64) mit einem Ablauf (66) angeordnet sind und stromab von dem Ventilsitz (46) des Rückflußverhinderers (48) seitlich ein Anschlußstutzen (40) zur Verbindung mit einem Warmwasserbereiter vorgesehen ist, wobei im Bereich des Kugelventils (26) ein verschließbarer Ablauf (36) vorgesehen ist, in einer ersten Schaltstellung des Kugelventils (26) ein Durchgangskanal (44) einen Durchgang von dem Einlaß (22) zu dem Rückflußverhinderer (48) freigegeben ist und in einer zweiten Schaltstellung des Kugelventils (26) der Durchgang abgesperrt ist aber ein gedrosselter Durchgang (68) eine Verbindung zwischen der stromaufwärtigen Seite (70) des Rückflußverhinderers (48) und dem Durchgangskanal (44) des Kugelventils (26) hergestellt ist, **dadurch gekennzeichnet, daß** in dem Durchgangskanal (44) ein sich über den Querschnitt des Durchgangskanals (44) erstreckender Schmutzfänger (72) angeordnet ist, welcher nach Öffnen des verschließbaren Ablaufs (36) durch diesen Ablauf (36) hindurch zu Wartungszwecken aus dem Durchgangskanal (44) des Kugelventils (24) herausziehbar ist.

2. Sicherheitsarmatur nach Anspruch 1, **dadurch gekennzeichnet, daß** an der Sicherheitsarmatur stromab von dem Ventilsitz (46) des Rückflußverhinderers (48) seitlich und gegen den Warmwasserbereiter-Anschlußstutzen (40) winkelversetzt ein weiterer Anschlußstutzen (60) zur direkten Verbindung mit einem thermostatischen Mischventil vorgesehen ist.

3. Sicherheitsarmatur nach Anspruch 1 oder 2, **dadurch gekennzeichnet, daß** der Schmutzfänger (72) fingerhutförmig ist und sich in der ersten Schaltstellung des Kugelventils (26) zu dem Einlaß (22) hin öffnet.
